# FASCICULE DE BREVET EUROPEEN

(11) **EP 4 237 190 B1**
(45) Date de publication et mention de la délivrance du brevet: **10.12.2025**
(21) Numéro de dépôt: 21794085.7
(22) Date de dépôt: 26.10.2021
(51) Int. Cl.: B27C 5/02, B27C 5/06

(54) **STRUCTURE DE MACHINE-OUTIL**
STRUKTUR VON EINER WERKZEUGMASCHINE
MACHINE TOOL STRUCTURE

(30) Priorité: 27.10.2020 FR 2011004
(43) Date de publication de la demande: 06.09.2023
(73) Titulaire: Engineering Francois Abelard, 64121 Serres-Castet (FR)
(72) Inventeur: ABELARD, François, 64121 SERRES-CASTET (FR)
(74) Mandataire: Oak & Fox
(86) Numéro de dépôt international: PCT/EP2021/079730
(87) Numéro de publication internationale: WO 2022/090261

(56) Documents cités:
- WO-A1-2017/158059
- WO-A1-2017/158090
- DE-A1- 4 433 076
- DE-C- 670 873
- US-A- 2 901 947

## Description

### Domaine de l'invention

La présente invention concerne une structure de machine-outil selon le préambule de la revendication 1. Une telle structure de machine-outil est connue du document WO 2017/158059 A1.

### Etat de la technique

Dans le domaine de l'usinage, en particulier de l'usinage du bois, on connait des machines-outils destinées à conformer des troncs d'arbres en pièces de bois de dimensions prédéfinies pour leur utilisation dans le domaine de la construction de bâtiments.

Notamment, on connait des raboteuses adaptées à transformer des pièces de bois, typiquement des billes d'arbres, de façon à dégauchir dans un premier temps les pièces de bois, puis à les usiner de sorte à produire des poutres ou planches par exemple destinées à constituer des pièces de charpente de bâtiments.

L'usinage est réalisé par des outils coupants entraînés en rotation et la pièce de bois est entraînée en translation depuis une entrée vers une sortie de la machine-outil.

Les raboteuses de pièces de bois pour la charpente comportent généralement une partie inférieure fixe formant bâti et comprenant une table d'usinage. Le bâti comprend des colonnes de levage, par exemple constituées par des vérins, reliant ledit bâti à une partie supérieure, formant un portique. Le portique porte un outil coupant destiné au rabotage d'une partie supérieure d'une pièce de bois à usiner disposée sur la table d'usinage.

Les colonnes de levage permettent de modifier la hauteur de l'outil coupant porté par le portique, c'est-à-dire la distance entre ledit outil coupant et la table d'usinage de sorte à faire varier une des dimensions, ici appelée l'épaisseur, des pièces de charpente produites.

À cet effet, les colonnes de levage sont généralement réparties autour de la table d'usinage et comportent un cylindre formant fourreau aménagé dans le bâti et dans lequel est adapté à coulisser une tige de vérin mécaniquement liée à la partie supérieure.

Les colonnes de levage des machines-outils de l'état de la technique ne permettent toutefois pas d'atteindre des courses de déplacement importantes.

En outre, les machines-outils de l'état de la technique ne présentent pas la possibilité de modifier leur course maximale, par exemple dans le cas dans lequel il y aurait à usiner des pièces de bois de dimensions importantes.

Dans ce cas, seule une modification substantielle et couteuse de la machine-outil est envisageable, ou alors un changement complet de la machine-outil est à considérer.

Il a précédemment été décrit les inconvénients d'une machine-outil adaptée à l'usinage du bois, mais il y a lieu de noter que ces inconvénients se retrouvent également sur les machines-outils de l'état de la technique adaptées à usiner d'autres types de matériaux.

### Exposé de l'invention

La présente invention a pour objectif de remédier à tout ou partie des inconvénients de l'art antérieur, notamment ceux exposés ci-avant.

A cet effet, il est proposé par la présente invention une structure de machine-outil, notamment destinée à l'usinage de pièces de bois, comportant un bâti comprenant :
- une semelle d'appui,
- une table d'usinage reposant sur ladite semelle et sur laquelle est destinée à être entraînée les pièces de bois à usiner,
- un cadre supérieur,
- des colonnes support interposées entre la semelle d'appui et le cadre supérieur.

La structure de machine-outil comprend en outre un tablier porte-outil relié à des organes d'entraînement en translation, interposés entre le cadre supérieur et la semelle d'appui, et configurés pour entraîner en coulissement le tablier porte-outil entre la table d'usinage et le cadre supérieur.

Dans des modes particuliers de réalisation, l'invention peut comporter en outre l'une ou plusieurs des caractéristiques suivantes, prises isolément ou selon toutes les combinaisons techniquement possibles.

Selon un mode de réalisation, le tablier porte-outils comporte au moins un chariot rigidement fixé à celui-ci. Selon un mode de réalisation, le chariot est rigidement fixé à un manchon cylindrique. Selon un mode de réalisation, le chariot comporte un élément coopérant avec un organe d'entrainement permettant de faire se déplacer le chariot le long d'un axe, préférentiellement un axe vertical. L'organe d'entrainement peut être par exemple un système à crémaillère, un vérin pneumatique, un galet d'entrainement, ou tout autre élément d'entrainement. L'organe d'entrainement comprend préférentiellement un élément moteur, tel un moteur électrique, un motoréducteur ou tout autre élément moteur.

Dans des modes particuliers de réalisation, les organes d'entraînement en translation sont formés par des vérins électriques comportant chacun une vis sans fin fixée par chacune de ses extrémités respectivement au cadre supérieur et à la semelle d'appui, de manière mobile en rotation, lesdits vérins électriques comprenant en outre chacun un chariot coopérant avec la vis sans fin par une liaison hélicoïdale, lesdits chariots étant fixés au tablier porte-outil.

Dans des modes particuliers de réalisation, les vis sans fin sont entraînées en rotation par des dispositifs de renvoi d'angle agencés sur le cadre supérieur et reliés les uns aux autres par des arbres de transmission liés à un arbre de sortie d'un moteur électrique.

Dans des modes particuliers de réalisation, la structure de machine-outil comprend des moyens stabilisateurs formés par des manchons cylindriques emmanchés autour des colonnes supports de manière libre en translation, lesdits manchons étant rigidement fixés aux chariots.

Les manchons cylindriques sont fixés au tablier porte-outil qui est de grande taille, c'est-à-dire ayant un diamètre de 160 millimètres à 200 millimètres. La longueur de coupe est de l'ordre de 1300 millimètres. Un tel tablier porte-outil permet l'usinage de la partie supérieure de grosses poutres en lamellé-collé qui peuvent atteindre la 1000 millimètres d'épaisseur pour une largeur de 1200 millimètres et une longueur de 11000 millimètres à 50000 millimètres. Le porte-outil est de préférence en acier. La vitesse angulaire du porte-outil se situe de préférence entre 6000 tours par minute et 8000 tours par minute. Le porte-outil est de préférence entraîné par un moteur fixé sur le tablier porte-outil.

Dans des modes particuliers de réalisation, les moyens stabilisateurs comportent des flasques, chaque flasque étant fixé à une extrémité d'un manchon et comportant une ouverture traversante à travers laquelle s'étend une colonne support.

Dans des modes particuliers de réalisation, chaque chariot est interposé entre et est relié mécaniquement à deux manchons adjacents, une colonne support étant agencée à chacun des coins du cadre supérieur.

### Présentation des figures

L'invention sera mieux comprise à la lecture de la description suivante, donnée à titre d'exemple nullement limitatif, et faite en se référant aux figures qui représentent :
[Fig. 1] une vue de face d'une structure de machine-outil selon la présente invention,
[Fig. 2] une vue de coté de la structure de machine-outil de la figure 1,
[Fig. 3] une vue de détail de la figure 2,
[Fig. 4] une vue de détail de la liaison entre des organes d'entraînement en translation et un tablier porte-outil de la structure de machine-outil de la figure 1,
[Fig. 5] une vue de trois-quarts d'un flanc de la structure de machine-outil de la figure 1,
[Fig. 6] une vue de trois-quarts d'un flanc de la structure de machine-outil de la figure 1.

Dans ces figures, des références identiques d'une figure à une autre désignent des éléments identiques ou analogues. Pour des raisons de clarté, les éléments représentés ne sont pas nécessairement à une même échelle, sauf mention contraire.

On note, dès à présent, que les figures ne sont pas à l'échelle.

### Description détaillée d'un mode de réalisation de l'invention

La présente invention concerne une structure de machine-outil 10, notamment destinée, dans un exemple d'application, à l'usinage du bois, par exemple massif ou lamellé-collé, et en particulier au rabotage de ces dernières.

Il y a lieu de noter que la présente invention peut également s'appliquer, sans modification structurelle, à une machine-outil adaptée à l'usinage d'autres types de matériaux.

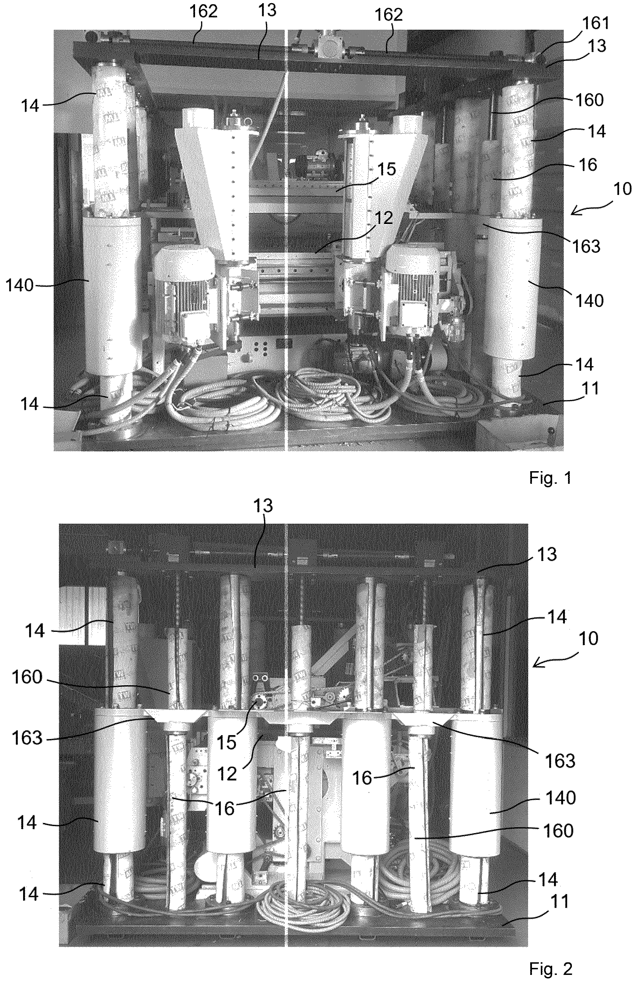

La structure de machine-outil 10, tel que représenté sur la figure 1, comporte un bâti formé par une semelle d'appui 11, une table d'usinage 12 reposant sur ladite semelle, un cadre supérieur 13 et des colonnes supports 14 interposées entre ledit cadre supérieur 13 et ladite semelle.

La structure de machine-outil 10 comporte en outre un tablier porte-outil 15 destiné à supporter, dans l'exemple de réalisation représenté sur les figures et décrit ci-après, un outil de rabotage. Un outil de rabotage permet la mise en épaisseur de la pièce-bois selon une dimension choisie.

Le tablier porte-outil 15 est relié à des organes d'entraînement 16 en translation prévus pour le déplacer en translation entre le cadre supérieur 13 et la table d'usinage 12 et ainsi modifier l'épaisseur de coupe de l'outil de rabotage.

La table d'usinage 12 est destinée à recevoir une pièce de bois à usiner et peut avantageusement comporter des moyens de guidage et d'entraînement de la pièce de bois à usiner.

Il y a lieu de préciser que les organes d'entraînement 16 et les colonnes supports 14 sont disposés de part et d'autre de la table d'usinage 12, comme le montrent les figures 1, 2, 5 et 6, sur les flancs du bâti de la structure de machine-outil 10, lesdits flancs définissant un couloir le long duquel la pièce de bois à usiner est destinée à être entraînée en translation par des dispositifs adaptés connus en soi de l'homme du métier.

La structure de machine-outil 10 supporte également des porte-outils d'usinage du bois connus en tant que tels de l'homme du métier. De tels porte-outils peuvent être destinés à porter des outils propres à raboter ou scier des pièces de bois entraînées en translation le long de la table d'usinage 12, de sorte à obtenir des produits finis tels que des poutres, planches, etc.

La présente invention concernant la structure de la machine-outil 10, l'agencement des porte-outils ne sera pas décrit ci-après. En outre, cet agencement est à la portée de l'homme du métier.

Par ailleurs, dans la présente demande seule la structure de machine-outil 10 objet de l'invention sera décrite et non la machine-outil dans sa globalité.

Comme le montrent les figures 1, 2, 5 et 6, les organes d'entraînement 16 sont adaptés à provoquer le déplacement du tablier porte-outil 15 selon une direction verticale, entre le cadre supérieur 13 et la table d'usinage 12.

La structure de machine-outil est de préférence destinée à l'usinage de poutres en bois en lamellé-collé. Avant l'usinage, ces poutres, constituées de lamelles de bois encollées et très fortement pressées, sont obtenues dans des moules qui permettent d'imposer les dimensions et la géométrie souhaitées. Typiquement, la structure de machine-outil permet d'obtenir des poutres droites qui sont le plus rectilignes possible. On peut noter qu'avant usinage, la poutre brute de décoffrage présente sur son extérieur un excès de colle extrêmement dur et inégalement réparti. Certaines zones de la poutre présentant également des irrégularités de présence de matière-bois. Cela donne lieu à des efforts de coupe pouvant être brutaux lorsque la poutre est usinée par le porte-outil 12.

Ces organes d'entraînement 16 peuvent être avantageusement formés par des vérins électriques comportant chacun une vis sans fin 160 s'étendant entre le cadre supérieur 13 et la semelle d'appui 11, lesdites vis sans fin 160 étant reliées audit cadre supérieur 13 et à ladite semelle par des liaisons pivot. Les vis sans fin 160 sont entraînées en rotation par des moyens adaptés, tels que des dispositifs de renvoi d'angle 161 agencés sur le cadre supérieur 13 et reliés les uns aux autres par des arbres de transmission 162 eux-mêmes reliés à un arbre de sortie d'un moteur électrique, par exemple par un dispositif de renvoi d'angle, comme le montrent les figures 1 à 3.

Cet agencement particulier des éléments de transmission de mouvement, c'est-à-dire des arbres de transmission 162 et des dispositifs de renvoi d'angle 161, permet avantageusement de pouvoir réaliser d'éventuels remplacements ou modifications des colonnes supports 14 et des vis sans fin 160, tel que décrit ci-après.

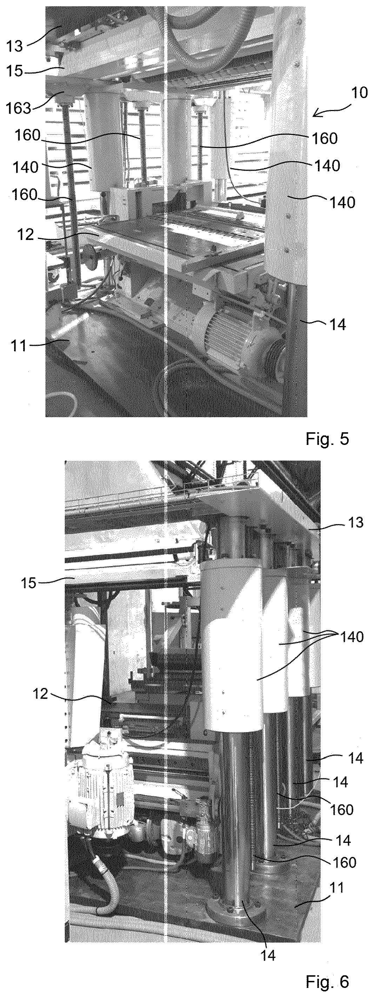

Il y a lieu de noter que sur les figures 1 à 4, les colonnes support 14 et les vis sans fin 160 apparaissent entourées d'une gaine de protection, et apparaissent sur les figures 5 et 6 sans ces gaines de protection.

Les vérins comportent également chacun un chariot 163 coopérant avec la vis sans fin 160 par une liaison hélicoïdale. Les chariots 163 sont rigidement liés au tablier porte-outil 15, tel que le suggèrent les figures 2, 4 et 5, c'est-à-dire liés selon une liaison mécanique du type encastrement.

L'entraînement en rotation des vis sans fin 160 provoque par conséquent le déplacement du tablier porte-outil 15 dans un sens opposé à la table d'usinage ou dirigé vers ladite table selon le sens de rotation desdites vis.

Comme représenté sur les figures 1 et 2, la structure de machine-outil 10 comporte préférentiellement des moyens stabilisateurs formés par les colonnes supports 14 rigidement fixés, comme précédemment décrit, par chacune de leurs extrémités, respectivement au cadre supérieur 13 et à la semelle d'appui 11. Ces colonnes supports 14 ont notamment pour rôle de maintenir ledit cadre dans une position élevée, à distance de la semelle d'appui 11, et sont donc préférentiellement agencés de sorte qu'une colonne support 14 supporte chacun des coins dudit cadre.

Les brutales variations d'efforts de coupe exigent la nécessité de contenir les à-coups avec moyens stabilisateurs qui, par ailleurs, sont mus en vertical lorsqu'il est nécessaire de régler la hauteur du tablier porte-outil 15 afin d'obtenir la cote d'épaisseur de la poutre usinée souhaitée. L'invention permet donc de pouvoir régler sur de grandes amplitudes la hauteur de coupe des pièces à usiner tout en conservant une rigidité de l'ensemble suffisante pour obtenir une qualité géométrique souhaitée lors de l'usinage. De plus, le réglage de la hauteur de coupe sur une grande amplitude se fait facilement, sans avoir à démonter la structure de machine-outil 10 pour modifier grandement la hauteur de coupe souhaitée. La structure machine-outil 10 selon l'invention permet donc également un gain de temps important lorsque la hauteur de coupe doit être modifiée.

Ces stabilisateurs permettent aussi une résilience de l'ensemble tablier porte-outil, qu'un seul portique massif de machine-outil ne pourrait assumer. Si le porte-outil était monté sur un bâti en fonte ou mécano soudé massif, on aurait une structure hyperstatique.

Les moyens stabilisateurs comprennent des manchons 140 cylindriques emmanchés autour de chacune des colonnes supports 14 de manière libre en translation. Les manchons 140 sont rigidement fixés aux chariots 163, comme le montrent les figures 2, 4 et 5, et permettent d'assurer un guidage en translation du tablier porte-outil 15 lors de son déplacement.

La structure selon l'invention permet donc une reprise dans la structure et dans les manchons cylindriques des efforts mécaniques importants induits par la coupe du bois. Une telle architecture permet d'éviter une trop grande déformation de la structure qui peut provoquer un déplacement géométrique du tablier porte-outil 15 et donc nuire à la qualité géométrique des pièces qui ont été usinées.

L'usinage de la partie supérieure des poutres permet d'obtenir une épaisseur constante avec un état de surface qui réponde au cahier des charges.

Cette invention supprime, du fait de la résilience de l'ensemble, les vibrations qui engendrent un bruit conséquent lors du fonctionnement de la machine.

Selon un mode de réalisation, le porte-outil 15 comporte des lames en carbure de tungstène. Cette disposition permet une pénétration de la colle et de la matière-bois avec souplesse. Cette disposition permet donc de ne plus avoir d'arrêt de la machine durant l'usinage puisque le porte-outil 15 assume la fonction sans dommage.

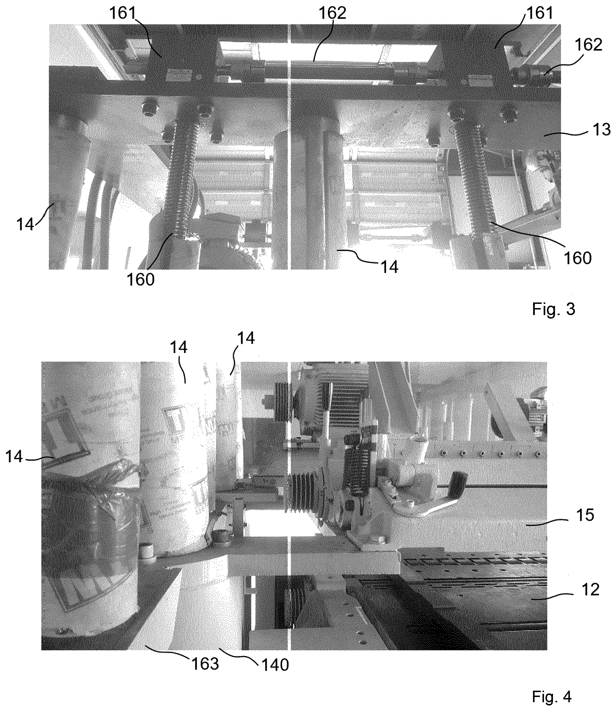

Dans un exemple préféré de réalisation de l'invention, les chariots 163 agencés sur un flanc de la structure de machine-outil 10 sont reliés les uns aux autres par des flasques avec lesquels ils forment une pièce monobloc, comme visible sur les figures 2 et 4. Chaque flasque est rigidement fixé à une extrémité supérieure d'un manchon 140 et présente une ouverture traversante à travers laquelle s'étend une colonne support 14, tel qu'il est visible sur les figures 1, 2 et 4.

Ces caractéristiques permettent de rigidifier la structure de machine-outil 10 et d'augmenter la résistance aux contraintes mécaniques des moyens stabilisateurs.

Avantageusement, les manchons 140 présentent préférentiellement une chambre interne en vis-à-vis de la colonne support 14 autour de laquelle il est emmanché, cette chambre interne étant prévu pour recevoir un corps gras permettant favoriser le glissement desdits manchons 140 le long desdites colonnes supports 14.

Préférentiellement, chaque organe d'entraînement 16 est interposé entre deux moyens stabilisateurs adjacents, c'est-à-dire que chaque chariot 163 est relié mécaniquement à deux manchons 140 adjacents, un moyen stabilisateur étant agencé à chacun des coins du cadre supérieur 13, comme décrit précédemment.

Les moyens stabilisateurs et notamment les colonnes support 14 permettent avantageusement de rigidifier la structure de la machine-outil 10 et d'absorber les efforts et contraintes mécaniques générés lors du fonctionnement de la machine-outil, notamment lors du fonctionnement de l'outil de rabotage.

Selon un mode de réalisation de l'invention, la structure machine-outil 10 comporte huit colonnes support 14. Ces colonnes support 14 sont de préférence situées en périphérie de la machine. Elles sont situées de préférence entre la semelle d'appui 11 et le cadre supérieur 13. De préférence, chaque colonne support 14 est équipée d'un moyen stabilisateur.

Selon un mode de réalisation, au moins une colonne support 14 comprend un pied qui est relié à la semelle d'appui 11. Selon ce mode de réalisation, le pied est équipé d'un joint élastique. La présence de joint élastique entre le pied de la colonne support 13 et la semelle d'appui 11 permet avantageusement d'éviter un hyperstatisme. Selon un mode de réalisation, chaque colonne support 13 comporte un joint élastique.

Dans l'exemple de réalisation de l'invention représenté sur les figures, la structure de machine-outil 10 comporte trois moyens stabilisateurs et deux organes d'entraînement 16 agencés sur chacun de ses flancs.

Un des avantages de la présente invention réside dans la modularité de ladite structure, dans le sens où il est possible de prévoir davantage de moyens stabilisateurs et d'organes d'entraînement 16 sans modifications structurelles importantes de la machine-outil. Une telle disposition permet par exemple d'ajouter un poste de découpe ou de traitement des pièces de bois en amont ou en aval de l'outil de rabotage.

Les modifications structurelles dans le cadre d'une évolution de la machine-outil, et donc du nombre de moyens stabilisateurs et d'organes d'entraînement 16 consistent seulement en une éventuelle modification du cadre supérieur 13 et de la semelle d'appui 11, ou en une fixation d'un cadre et d'une semelle additionnels.

En outre, il est également possible d'augmenter facilement la limite de déplacement en hauteur du tablier porte-outil 15 afin d'augmenter l'épaisseur de coupe de l'outil de rabotage, pour s'adapter aux dimensions de la pièce de bois à raboter, par exemple en remplaçant seulement les colonnes supports 14 et les vis sans fin 160 par d'autres présentant une longueur plus importante.

Grâce aux caractéristiques de l'invention, la structure de machine-outil 10 permet de faire évoluer simplement, rapidement et sans engendrer un cout substantiel supplémentaire, une machine-outil comprenant ladite structure.

Autrement dit, la présente invention permet de faire évoluer les limites d'épaisseur de coupe de la machine-outil selon les dimensions des pièces de bois à usiner et d'ajouter des postes de découpe ou de traitement des pièces de bois, ceci sans modifier le tablier porte-outil 15, ni la table d'usinage 12, ni les éventuels porte-outils ou les éléments de transmission de mouvement, grâce à l'agencement particulier des colonnes supports 14 et des organes d'entraînement 16.

Plus précisément, les organes d'entraînement 16 et les moyens stabilisateurs étant agencés sur les flancs de la structure de machine-outil 10 et de façon non intégrée à la table d'usinage 12 et au tablier porte-outil 15, il est possible de les modifier ou de les remplacer de sorte à faire varier des paramètres limites de la machine-outil, tel que la course maximale du tablier porte-outil 15, sans nécessiter plus de modifications de la structure de ladite machine-outil.

Un autre avantage de la présente invention réside dans le fait que, le changement des colonnes supports 14 et des vis sans fin 160 pour obtenir une course plus importante du tablier porte-outil 15 ne s'accompagne pas d'un changement de l'épaisseur minimale de coupe. C'est-à-dire que le changement des colonnes supports 14 et des vis sans fin 160 ne fait varier que l'épaisseur maximale de coupe.

Grâce à cet avantage permettant de conserver l'épaisseur minimale de coupe de la machine-outil, ladite machine-outil est particulièrement polyvalente et peut usiner des pièces de bois de tailles très diverses.

Par ailleurs, l'agencement de la structure de machine-outil 10 selon la présente invention permettant le déplacement du tablier porte-outil 15 entre le cadre supérieur 13 et la table d'usinage 12, la course dudit tablier porte-outil 15 est significativement plus importante que celle des tabliers des machines-outils de l'état de l'art.

## Revendications

1. Structure de machine-outil (10) comportant un bâti comprenant :
- une semelle d'appui (11),
- une table d'usinage (12) reposant sur ladite semelle et sur laquelle est destinée à être entraînée les pièces de bois à usiner,
- un cadre supérieur (13),
- des colonnes supports (14) interposées entre la semelle d'appui (11) et le cadre supérieur (13),
**caractérisé en ce que** la structure de machine-outil (10) comprend en outre un tablier porte-outil (15) relié à des organes d'entraînement (16) en translation, interposés entre ledit cadre supérieur (13) et la semelle d'appui (11), et configurés pour entraîner en coulissement le tablier porte-outil (15) entre la table d'usinage (12) et le cadre supérieur (13), et
des moyens stabilisateurs formés par des manchons (140) cylindriques emmanchés autour des colonnes supports (14) de manière libre en translation, lesdits manchons (140) étant rigidement fixés à des chariots (163) rigidement fixés au tablier porte-outil (15).

2. Structure de machine-outil (10) selon la revendication 1, dans laquelle les organes d'entraînement (16) en translation sont formés par des vérins électriques comportant chacun une vis sans fin (160) fixée par chacune de ses extrémités respectivement au cadre supérieur (13) et à la semelle d'appui (11), de manière mobile en rotation, lesdits vérins électriques comprenant en outre chacun un chariot (163) coopérant avec la vis sans fin (160) par une liaison hélicoïdale, lesdits chariots (163) étant fixés au tablier porte-outil (15).

3. Structure de machine-outil selon la revendication 2, dans laquelle les vis sans fin (160) sont entraînées en rotation par des dispositifs de renvoi d'angle agencés sur le cadre supérieur (13) et reliés les uns aux autres par des arbres de transmission liés à un arbre de sortie d'un moteur électrique.

4. Structure de machine-outil selon la revendication 1, dans laquelle les moyens stabilisateurs comportent des flasques, chaque flasque étant fixé à une extrémité d'un manchon (140) et comportant une ouverture traversante à travers laquelle s'étend une colonne support (14).

5. Structure de machine-outil selon la revendication 1, dans laquelle chaque chariot (163) est interposé entre et est relié mécaniquement à deux manchons (140) adjacents, une colonne support (14) étant agencée à chacun des coins du cadre supérieur (13).

## Patentansprüche

1. Werkzeugmaschinenaufbau (10) mit einem Gestell:
- eine Auflageplatte (11),
- ein Bearbeitungstisch (12), der auf der Platte ruht und auf dem die zu bearbeitenden Holzteile angetrieben werden sollen,
- ein oberer Rahmen (13),
- Stützsäulen (14), die zwischen der Auflageplatte (11) und dem oberen Rahmen (13) angeordnet sind,
**dadurch gekennzeichnet, dass** der Werkzeugmaschinenaufbau (10) ferner einen mit axial beweglichen Antriebsorganen (16) verbundenen Werkzeugträgerwagen (15) umfasst, die zwischen dem oberen Rahmen (13) und der Auflageplatte (11) angeordnet und so eingerichtet sind, dass sie den Werkzeugträgerwagen (15) zwischen dem Bearbeitungstisch (12) und dem oberen Rahmen (13) verschiebbar antreiben, und
Stabilisierungsmittel, die durch zylindrische Muffen (140) gebildet werden, die frei beweglich um die Stützsäulen (14) herum geschoben werden, wobei die Muffen (140) starr an Schlitten (163) befestigt sind, die starr am Werkzeugträgerwagen (15) befestigt sind.

2. Werkzeugmaschinenaufbau (10) nach Anspruch 1, wobei die axial beweglichen Antriebsorgane (16) durch elektrische Zylinder gebildet werden, die jeweils eine Schnecke (160) aufweisen, die an jedem ihrer Enden jeweils am oberen Rahmen (13) und an der Auflageplatte (11) drehbar befestigt ist, wobei die elektrischen Zylinder ferner jeweils einen Schlitten (163) umfassen, der über eine Schneckenverbindung mit der Schnecke (160) zusammenarbeitet, wobei die Schlitten (163) am Werkzeugträgerwagen (15) befestigt sind.

3. Werkzeugmaschinenaufbau nach Anspruch 2, wobei die Schnecken (160) durch Winkelgetriebe, die am oberen Rahmen (13) angeordnet sind und durch mit einer Abtriebswelle eines Elektromotors verbundene Antriebswellen miteinander verbunden sind, in Drehung versetzt werden.

4. Werkzeugmaschinenaufbau nach Anspruch 1, wobei die Stabilisierungsmittel Flansche aufweisen, wobei jeder Flansch an einem Ende einer Muffe (140) befestigt ist und eine durchgehende Öffnung aufweist, durch die sich eine Stützsäule (14) erstreckt.

5. Werkzeugmaschinenaufbau nach Anspruch 1, wobei jeder Schlitten (163) zwischen zwei benachbarten Muffen (140) liegt und mit diesen mechanisch verbunden ist, wobei an jeder Ecke des oberen Rahmens (13) eine Stützsäule (14) angeordnet ist.

## Claims

1. Machine tool structure (10) comprising a frame comprising:
- a bearing plate (11),
- a work table (12) resting on said plate and over which the pieces of wood to be milled are intended to be conveyed,
- an upper frame (13),
- support columns (14) interposed between the bearing plate (11) and the upper frame (13),
**characterized in that** the machine tool structure (10) further comprising a tool-holder apron (15) connected to translational drive members (16), interposed between said upper frame (13) and the bearing plate (11), and configured to slide the tool-holder apron (15) between the work table (12) and the upper frame (13), and
stabilizing means formed by cylindrical sleeves (140) fitted freely translationally around support columns (14), said sleeves (140) being rigidly attached to carriages (163) rigidly attached to the tool-holder apron (15).

2. Machine tool structure (10) according to claim 1, wherein the translational drive members (16) are formed by electric cylinders each comprising a worm screw (160) attached by each of its ends respectively to the upper frame (13) and to the bearing plate (11), rotatably, said electric cylinders each further comprising a carriage (163) cooperating with the worm screw (160) by a helical link, said carriages (163) being attached to the tool-holder apron (15).

3. Machine tool structure of claim 2, wherein the worm gears (160) are rotated by angular gear devices arranged on the upper frame (13) and connected to each other by transmission shafts linked to an output shaft of an electric motor.

4. Machine tool structure of claim 1, wherein the stabilizing means comprise flanges, each flange being attached to one end of a sleeve (140) and having a through-hole through which a support column (14) extends.

5. Machine tool structure according to claim 1, wherein each carriage (163) is interposed between and mechanically connected to two adjacent sleeves (140), a support column (14) is arranged at each corner of the upper frame (13).
